**Europäisches Patentamt**

**European Patent Office**

**Office européen des brevets**

(11) Veröffentlichungsnummer: **0 052 812**

**A2**

## (12) EUROPÄISCHE PATENTANMELDUNG

(21) Anmeldenummer: **81109443.2**

(22) Anmeldetag: **30.10.81**

(51) Int. Cl.³: **G 01 N 21/89**

(30) Priorität: **21.11.80 DE 3043852**

(43) Veröffentlichungstag der Anmeldung:
**02.06.82 Patentblatt 82/22**

(84) Benannte Vertragsstaaten:
**AT BE CH FR GB IT LI LU NL SE**

(71) Anmelder: **Koninklijke Textielfabrieken Nijverdal-Ten Cate N.V.**
**Postbox 58**
**NL-7600 GD Almelo(NL)**

(71) Anmelder: **Technisch Bureau A.B.O.F. 1972 B.V.**
**Hogelandseweg 3**
**NL-6545 AC Nijmegen(NL)**

(72) Erfinder: **Hurkmans, Gerardus A.C.M.**
**Kaaplandstraat 9**
**NL-6543 PB Nijmegen(NL)**

(74) Vertreter: **Schulze Horn, Stefan, Dipl.-Ing. et al,**
**Patentanwälte Dipl.-Ing. S. Schulze Horn M.SC. Dr. H.**
**Hoffmeister Goldstrasse 36**
**D-4400 Münster(DE)**

(54) Verfahren zum Feststellen von Signal-Abweichungen unter Zuhilfenahme eines integrierenden Differenzverstärkers.

(57) Verfahren zum Feststellen von Signal-Abweichungen unter Zuhilfenahme eines integrierenden Differenzverstärkers, bei der die Meßanordnung Abtastsignalverläufe $U_R$ mit wellenartigen Kurvenzügen ergibt. Dem ersten, invertierenden Eingang des Differenzverstärkers wird der Abtastsignalverlauf $U_R$ und dem zweiten Eingang des Differenzverstärkers eine Gleichspannung $+U_S$ eingegeben. Letztere ist so bemessen, daß bei ungestörtem $U_R$ die integrierte Spannung

$$U_I = \int_0^t (U_R - U_S)\, dt' < 0 \text{ ist,}$$

wobei nach einer relativ kurzen Zeit t $U_I$ gegen die Verstärkergrenzspannung $-U_L$ geht. Bei Auftreten von Signalabweichungen, also bei gestörtem Signalverlauf $U_R$, ist das Integral $U_I$ 0, so daß sich ein Fehlererkennungssignal ergibt.

./...

EP 0 052 812 A2

Fig. 1

0052812

**Verfahren zum Feststellen von Signal-Abweichungen unter Zuhilfenahme eines integrierenden Differenzverstärkers**

Die Erfindung betrifft ein Verfahren zum Feststellen von Signal-Abweichungen unter Zuhilfenahme eines integrierenden Differenzverstärkers, beispielsweise bei der opto-elektronischen Kontrolle einer laufenden Materialbahn, bei der die Meßanordnung Abtastsignalverläufe $U_R$ mit wellenartigen Kurvenzügen erzeugt.

Beispielsweise kann ein Verfahren der genannten Art bei der Fehlerfeststellung verwendet werden, wobei eine reflektierende oder transparente, sich bewegende Bahn, insbesondere aus textilem Material, vorhanden ist, die mit in Reihe quer zur Bahn angeordneten photoelektrischen Sensoren betrachtet wird, die in Abstand von der Bahn angeordnet sind und die das reflektierte oder durchfallende Licht aufnehmen und entsprechend der Intensität des auf sie fallenden Lichtes einen Abtastsignalverlauf $U_R$ erzeugen.

Aus der Patentliteratur sind zahlreiche Lösungsvorschläge für opto-elektronische Untersuchungen eines sich bewegenden bandförmigen Materials bekannt. Darunter sind solche, die mit Hilfe eines Scanning-Prinzips die Oberfläche der Bahn laufend abtasten, wobei die sich ergebenden elektrischen Signale der photoelektrischen Sensoren durch ein elektrisches Netzwerk nach bestimmten Kriterien aufgearbeitet werden.

Es kann gezeigt werden, daß bei der Untersuchung von textilem Material ein relativ hoher Rauschpegel erzeugt wird, so daß das Signal-Rausch-Verhältnis im allgemeinen sehr klein ist und das Signal sehr schwer analysiert oder bestimmten Fehlerkriterien zugeordnet werden kann.

Es stellt sich damit die Aufgabe, ein Verfahren zum Feststellen von Signal-Abweichungen zu finden, beispielsweise zur opto-elektronischen Kontrolle einer laufenden Materialbahn, das vom Prinzip her ein hohes Signal-Rausch-Verhältnis ermöglicht, so daß eine sichere Fehlerfeststellung nicht nur dem reinen Vorhandensein nach, sondern auch nach Art der Fehler, beispielsweise Fadenverdünnung oder -verdichtung, möglich ist.

Diese Aufgaben werden für ein Verfahren der eingangs genannten Art gelöst, bei dem dem ersten, invertierenden Eingang des Differenzverstärkers der Abtastsignalverlauf $U_R$ eingegeben wird,
bei dem dem zweiten Eingang des Differenzverstärkers eine Gleichspannung $+U_S$ eingegeben wird, die so bemessen ist, daß bei ungestörtem $U_R$ die integrierte Spannung

$$U_I = - \int_0^t (U_R - U_S) \, dt' < 0 \text{ ist,}$$

wobei nach einer relativ kurzen Zeit t, d. h. nach etwa zwei bis zehn Durchängen mit $\frac{dU_R}{dt} = 0$, $U_I$ gegen die Verstärker-Grenzspannung $-U_L$ geht, wobei bei Auftreten von Signalabweichungen, also bei gestörtem Signalverlauf $U_R$, das Integral $U_I > 0$ ist, so daß ein Fehlererkennungssignal sich ergibt.

Insbesondere erlaubt es das Verfahren, daß Fehler der

Charakteristika

a) $\quad U_{I1} = + \int\limits_{t_1}^{t_2} (-U_R + U_{S1})\, dt' > 0 \quad$ und

b) $\quad \dot{U}_{I2} = - \int\limits_{t3}^{t4} (+U_R - U_{S2})\, dt' > 0$

unterschieden werden können.

Hierzu wird das Abtastsignal $U_R$ einem ersten Differenzverstärker und parallel dazu einem zweiten Differenzverstärker über ein vorgeschaltetes, negierendes Schaltelement aufgegeben, wobei sich an den Ausgängen der beiden Differenzverstärker Fehlererkennungssignale verschiedener Fehlerarten ergeben.

Der Schaltkreis für die Durchführung des Verfahrens ist relativ einfach zu realisieren. Wesentliche Teile sind:
a) ein integrierender Differenzverstärker im ersten Zweig, dessen erster, invertierender Eingang mit dem Abtastsignal $U_R$ und dessen zweiter Eingang mit der Schwelleneingangsspannung $U_{S1}$ beaufschlagt ist, wobei der Verstärker eine Grenzspannung von $-U_{L1}$ besitzt,
b) ein zweiter ingetrierender Differenzverstärker im zweiten Zweig, dem ein negierendes Schaltelement vorgeschaltet ist, und der damit mit dem negativen Abtastsignal $-U_R$ am ersten, invertierenden Eingang beaufschlagt ist, und dessen zweiter Eingang mit einer zweiten Schwelleneingangsspannung $U_{S2}$ beaufschlagt ist, wobei dieser Verstärker eine Grenzspannung von $-U_{L2}$ besitzt.

Bei dem Verfahren wird beispielsweise ein Abtastsignal verarbeitet, das bei entsprechender Abstimmung von Geschwindigkeit der Bahn und Taktzeit der optischen Aufnahmefolge einen wellenartigen Kurvenzug verarbeitet, bei dem die Amplituden mit negativem Vorzeichen beispielsweise das Vorhandensein eines Kettfadens anzeigen, während Amplituden mit positivem Vorzeichen einer Lücke zwischen Kettfäden entsprechen. Dieses gilt bei der Meßanordnung, bei der sich eine Leuchtquelle unterhalb der sich bewegenden Bahn befindet.

Einzelheiten der Schaltung und der Signalverarbeitung ergeben sich aus der nachfolgenden Beschreibung eines Ausführungsbeispieles, das in der Zeichnung dargestellt ist. Die Figuren der Zeichnung zeigen:

Figur 1 die schematische Darstellung einer Meßanordnung zum Beschauen einer transparenten, sich bewegenden Bahn aus textilem Material mit der nachgeschalteten Diskriminator-Elektronik;

Figur 2 eine schematische Darstellung einer Signalverarbeitung, wie sie beispielsweise an einem textilen Gewebe bewonnen wird.

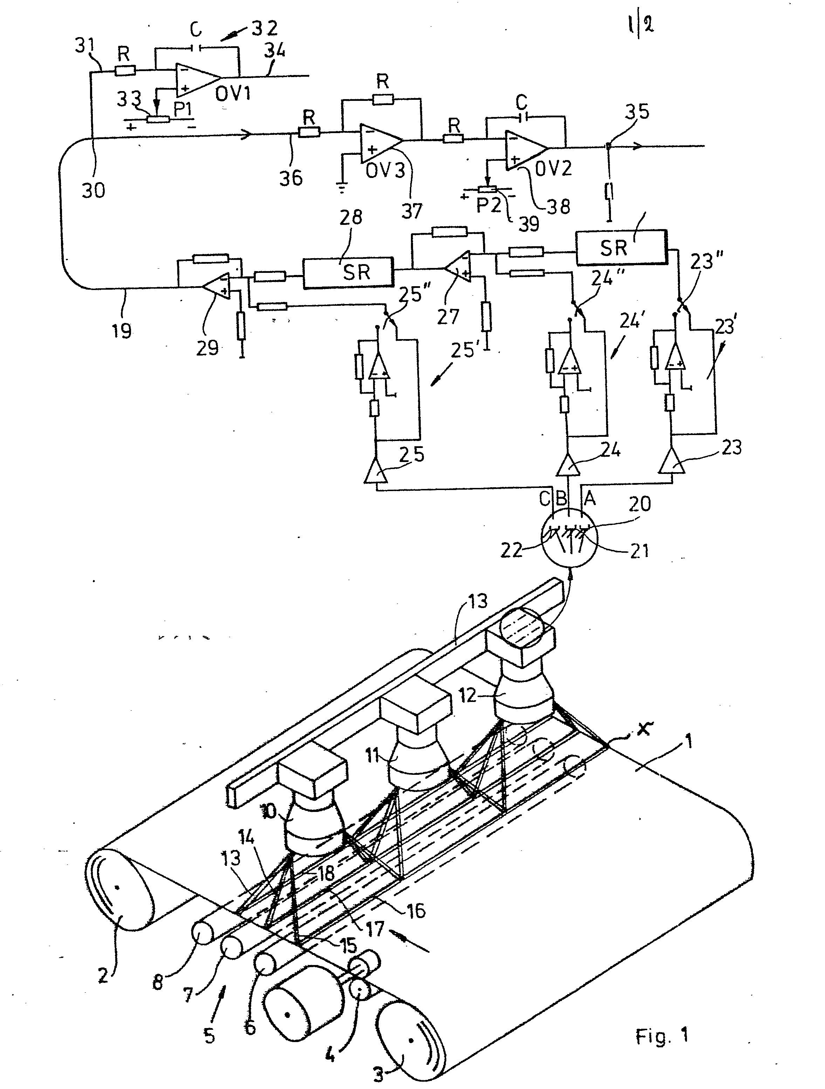

In Figur 1 ist schematisch eine Vorrichtung zum Feststellen von Fehlern dargestellt. Eine zu überwachende Textilbahn 1, die in Richtung des Pfeils mit Hilfe eines Rollenantriebes 2 von einer Vorratsrolle 3 abgezogen wird, passiert zunächst eine Registriereinheit (Photodisk) 4. Die Photodisk hat die Aufgabe, mit einer Reibrolle die Bahnposition (abgelaufene Länge) und indirekt die Bahngeschwindigkeit festzustellen, so daß sowohl die Linienkoordinate als auch die Geschwindigkeit festlegbar sind. Anschließend überläuft die Bahn eine Lampenstation 5, die im wesentlichen aus drei, über die gesamte Bahnbreite parallel ausgerichteten, in Laufrichtung hintereinander angeordneten Glühwendellampen 6, 7, 8 besteht. Die Lampen sind beispielsweise bekannte 60 W-Gleichstrom-Drahtwendellampen, die einen Lichtstrom erzeugen, von dem ein ausreichender Teil durch die teiltransparente Textilbahn hindurchtritt.

Oberhalb der Lampen sind (nicht dargestellte) Schlitzblenden angeordnet, die jeweils ein schmales Lichtbündel 16 - 18 erzeugen. Außerdem können Grau-, Polarisations- und/oder Farbfilter in die Lichtbündel vor oder
hinter der Bahn eingebaut sein.

Über der Bahn im Bereiche der Lampenanordnung 5 sind
drei fokussierende Objektive 10, 11, 12 über die Bahnbreite verteilt angeordnet, so daß jedes der Objektive
aufgrund seiner Brennweite einen Teil der Lichtbündel
16 - 18 erfaßt und fokussiert, die von je einer der
Lampen 6 - 7 ausgehen. Dabei wird von der mittleren
Lampe 7 in erster Linie das direkte, von den anderen
Lampen jedoch das an der Textilbahn gestreute Licht
erfaßt. Meßtechnisch bedeutsam ist, daß bei der gewählten Meßmethode, die mit Streulicht arbeitet, eine
Reflektion innerhalb der Textilbahn auftreten kann,
z. B. an fehlerhaften Fäden oder an sich in der Bahn
befindlichen Fremdkörpern, so daß diese Fehler besonders gut erfaßt werden. Durch das Durchlaufen dreier
verschiedener Blickwinkel wird im allgemeinen jede als
Fehler zu definierende Veränderung erfaßt.

Die fokussierten Abbildungen der Bahnbereiche werden
auf je einen 1.024 Bit-Photodioden-Linienscanner 20,
21, 22 projiziert. Die drei jedem Objektiv zugeordneten Linienscanner haben einen Sensorteil von 25,4 mm
(1 Zoll) Länge, auf dem 1.024 durch ein Quarzfenster
abgeschirmte, elektrisch voneinander getrennte Photodioden nebeneinander in einer Linie angeordnet sind.
Derartige Linienscanner sind an sich bekannt ( z. B.
RETICON RL 1.024 B). Teilt man, wie im Ausführungsbeispiel vorgeschlagen, daher die gesamte Breite der
Textilbahn in drei Überwachungsbereiche auf, so sind
bei einer gewissen Überlappung jeder Lampe ca. 3.000
Meßpunkte zugeordnet. Jedes einzelne Photodiodensignal
gibt daher einen relativ eng begrenzten Bereich wieder.

Beispielsweise werden Meßanordnungen gewählt, so daß eine Bahnbreite von 1 mm von 10 Photodioden (Meßpunkten) erfaßt wird. Die maximale spektrale Empfindlichkeit derartiger Linienscanner liegt im Bereich von 6000 - 8000 nm.

Das Video-Ausgangssignal des Linienscanners ist eine Impulsfolge von 1.024 Ladungen, die von einem Videoausgang abgerufen werden. Da die Ausgangssignale nur als kapazitive Ladungen abgerufen werden können, wird jedem Linienscanner 20, 21, 22 je ein Vorverstärker 23, 24, 25 nachgeschaltet. Die Ausgänge der Vorverstärker 23 - 25 sind wie folgt verbunden:

Ausgang des Vorverstärkers 23 mit dem Eingang eines ersten Schieberegisters 26, dessen Ausgang mit dem ersten Eingang eines ersten Differenzverstärkers 27 verbunden ist;

Ausgang des Vorverstärkers 24 ist mit dem zweiten Eingang des ersten Differenzverstärkers 27 verbunden;

Ausgang des Vorverstärkers 25 ist mit dem zweiten Eingang eines zweiten Differenzverstärkers 29 verbunden;

der Ausgang des Differenzverstärkers 27 ist an den Eingang eines Schieberegisters 28 angeschlossen, dessen Ausgang mit dem ersten Eingang des zweiten Differenzverstärkers 29 verbunden ist. Das Ausgangssignal des Differenzverstärkers 29 ist über eine Verbindungsleitung 19 mit einem Diskriminatorkreis für das Videosignal verbunden. Am Ausgang des zweiten Differenzverstärkers 29 entsteht nämlich ein "gemeinsames Videosignal", dessen elektronische Analyse durch einen Diskriminatorkreis durchgeführt wird.

Das über die Leitung 19 ankommende Videosignal gelangt an die Verzweigung 30. Über die Leitung 31 und über einen Vorwiderstand wird es dem Differenzverstärker 32 zugeführt. Dabei gelangt das Abtastsignal $U_R$, d. h. das Videosignal, an den ersten, invertierenden Eingang (-), während der zweite Eingang mit einer Schwelleneingangsspannung $U_{S1}$ beaufschlagt ist, die an dem Potentiometer 33 einstellbar ist. Der Differenzverstärker 32 besitzt eine untere Grenzspannung von $-U_{L1}$. Das Ausgangssignal des Verstärkers gelangt an die Leitung 34 und kann beispielsweise mit Hilfe eines Oszillographen, X-T-Schreibers oder dergleichen aufgenommen und anschließend analysiert werden.

Weiterhin wird das Abtastsignal $U_R$ über eine Leitung 36 einem Inverter 37 zugeführt, der die Amplituden des Videosignals im Vorzeichen umkehrt. Über einen Vorwiderstand wird die neue Signalkurve dem zweiten Differenzverstärker 38 zugeführt, und zwar dem invertierenden Eingang das Signal $-U_R$ und dem nicht-invertierenden Eingang (+) eine zweite Schwelleneingangsspannung $U_{s2}$, die gleich oder verschieden zu der ersten Schwelleneingangsspannung $U_{S1}$ sein kann.

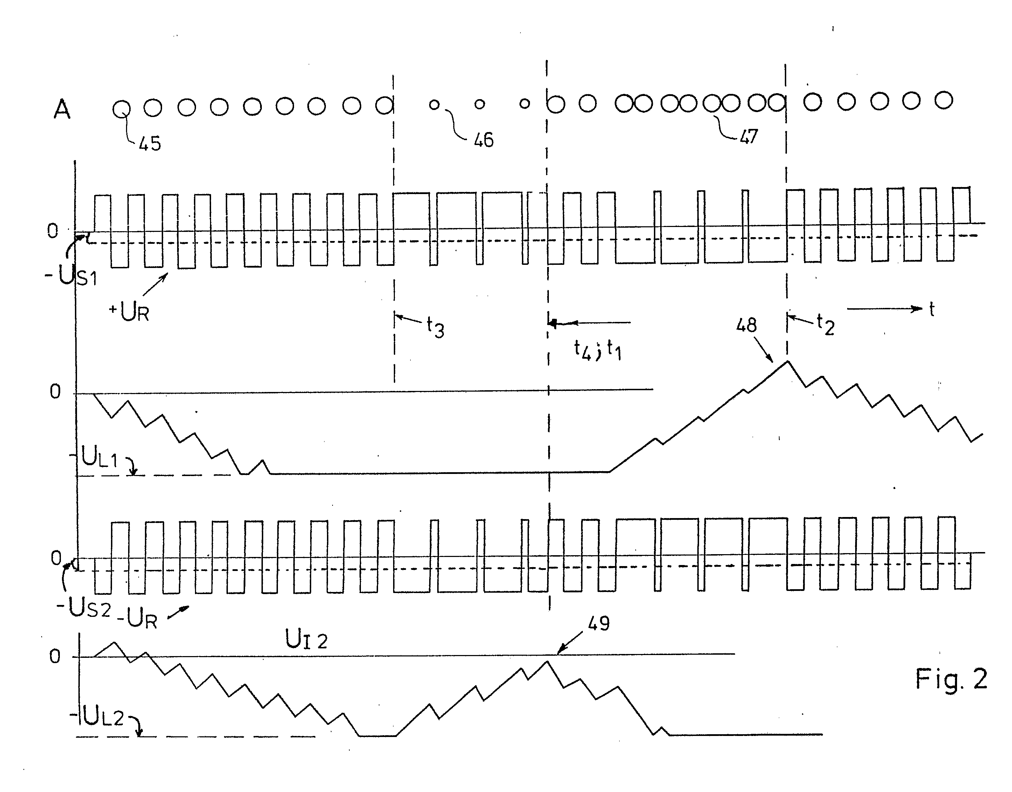

Figur 2 zeigt verschiedene Signalfolgen, die sich bei der Messung eines textilen Materials, beispielsweise eines Nesselgewebes ergeben. Dabei ist in der Figur 2 mit A eine Reihe von Kettfäden 45 dargestellt, die auf der rechten und linken Seite eine "Normalverteilung" haben, während in den Bereichen 46 eine Verdünnung und im Bereich 47 eine Verdichtung der Fäden gegeben ist. Beim optischen Abtasten mit der beschriebenen Vorrichtung gemäß Figur 1 ergibt sich schematisch ein Signalverlauf $U_R$. Es ist zu erkennen, daß bei Normalverteilung die Amplituden mit negativem und positivem Vorzeichen gleich hoch sind. Dasselbe gilt auch in den Bereichen 46 bzw. 47, jedoch sind hier die Amplituden im positiven Bereich breiter (deutet auf Verdünnung) bzw. im negativen Bereich breiter (deutet auf Verdichtung). Die angelegte Eingangsschwellenspannung $U_{S1}$ beträgt beispielsweise 25 % der Amplitudengröße. Entsprechend fällt das integrierte Signal zunächst stufenweise ab, bis es die negative Grenzspannung $-U_{L1}$ erreicht hat. Das integrierte

8 0052812

Signal verharrt bei diesem negativen Wert $U_{L1}$, und zwar auch im Bereich der Verdünnungen 46. Erst im Bereich 47, d. h. im Verdichtungsbereich, ergibt das integrierte Signal $U_{I1}$ einen Peak 48, der nach Einsetzen des Bereichs mit normaler Verteilung wieder abgebaut wird. Dieser Peak 48, der meßtechnisch sehr leicht festzuhalten und einer bestimmten lokalisierten Stelle auch zuzuordnen ist, deutet damit auf eine Verdichtung.

Während also bei ungestörtem $U_R$ die integrierte Spannung

$$U_I = - \int_o^t (U_R - U_S) \, dt' < 0$$

ist, ergeben sich im Bereiche $t_1 - t_2$ (vgl. Figur 2) Peaks, die sich durch folgende Formel darstellen lassen:

$$U_{I1} = + \int_{t1}^{t2} (-U_R + U_{S1}) \, dt' > 0.$$

Dieses Signal wird an der Ausgangsleitung 34 erhalten.

An der Ausgangsleitung 35 wird ein Signal erhalten, bei dem die invertierte Signalabtastspannung $-U_R$ untersucht wird. Hierbei ergibt sich in der Zeitspanne $t_3 - t_4$, d. h. im Verdünnungsbereich 46, ein Peak 49, wenn eine Schwelleneingangsspannung $U_{S2}$ dem Verstärker 38 aufgeschaltet wird.

Ganz deutlich ist auch hier zu erkennen, daß im zweiten Zweig die Verdichtung nicht erfaßt wird, sondern nur die Verdünnung. Damit werden im zweiten Kreis nur Fehler des Charakteristikums

$$U_{I2} = - \int_{t3}^{t4} (+U_R - U_{S2}) \, dt' > 0$$

erfaßt.

Erforderlich ist, daß das Abtastsignal $U_R$ dem ersten Differenzverstärker 32 und parallel einem zweiten Differenzverstärker über ein vorgeschaltetes, negierendes Schaltelement aufgegeben wird, wobei sich an den Ausgängen der beiden Differenzverstärker Fehlererkennungssignale verschiedener Fehlerarten ergeben.

Bei der beschriebenen Fehlererkennungsschaltung lassen sich selbstverständlich darüber hinaus auch grobe Fehler, wie Löcher, die sich über mehrere mm erstrecken, oder Flecken mit ähnlicher Ausdehnung, sicher erkennen. Wesentlich ist auch, daß selbstverständlich nicht erforderlich ist, daß die Kurve eine Reihe von Rechteckimpulsen ist. Ebenso lassen sich sinusähnliche oder dreieckige Kurvenfolgen analysieren. Wesentlich ist, daß die Schwelleneingangsspannung $U_S$ jeweils so angepaßt wird, daß nach relativ kurzer Zeit t die integrierte Spannung $U_I$ gegen die Verstärkergrenzspannung $-U_L$ geht, so daß die Normalverteilung deutlich eine konstante Grundspannung ergibt. Das Verfahren eignet sich damit für die Analyse verschiedener Meßkreise, also auch für solche, die die Oberflächenbeschaffenheit von Papierbahnen, Filmen, Walzblech und dergleichen opto-elektronisch untersuchen.

A1

**P a t e n t a n s p r ü c h e :**

1. Verfahren zum Feststellen von Signal-Abweichungen unter Zuhilfenahme eines integrierenden Differenzverstärkers, beispielsweise bei der opto-elektronischen Kontrolle einer laufenden Materialbahn, bei der die Meßanordnung Abtastsignalverläufe $U_R$ mit wellenartigen Kurvenzügen ergibt,
dadurch gekennzeichnet, daß
dem ersten, invertierenden Eingang des Differenzverstärkers der Abtastsignalverlauf $U_R$ eingegeben wird, und daß dem zweiten Eingang des Differenzverstärkers eine Gleichspannung $+U_S$ eingegeben wird, die so bemessen ist, daß bei ungestörtem $U_R$ die integrierte Spannung

$$U_I = \int_0^t (U_R - U_S)\, dt' < 0 \text{ ist,}$$

wobei nach einer relativ kurzen Zeit $t$ $U_I$ gegen die Verstärkergrenzspannung $-U_L$ geht,
und daß bei Auftreten von Signalabweichungen, also bei gestörtem Signalverlauf $U_R$, das Integral $U_I > 0$ ist, so daß sich ein Fehlererkennungssignal ergibt.

2. Verfahren nach Anspruch 1, dadurch gekennzeichnet, daß zur Diskriminierung von Fehlern der Charakteristika

a) $$U_{I1} = + \int_{t1}^{t2} (-U_R + U_{S1})\, dt' > 0 \text{ und}$$

b) $$U_{I2} = - \int_{t3}^{t4} (+U_R - U_{S2})\, dt' > 0$$

das Abtastsignal $U_R$ einem ersten Differenzverstärker und parallel einem zweiten Differenzverstärker über ein vorgeschaltetes, negierendes Schaltelement aufgegeben wird, wobei sich an den Ausgängen der beiden

**0052812**

Differenzverstärker Fehlererkennungssignale verschiedener Fehlerarten ergeben.

3. Einrichtung zur Durchführung des Verfahrens nach den Ansprüchen 1 und 2, gekennzeichnet durch ein Netzwerk mit folgenden Schaltelementen:

a) ein integrierender Differenzverstärker (32) im ersten Zweig, dessen erster, invertierender Eingang mit dem Abtastsignal $U_R$ und dessen zweiter Eingang mit der Schwelleneingangsspannung $U_{S1}$ beaufschlagt ist, wobei der Verstärker eine Grenzspannung von $-U_{L1}$ besitzt,

b) ein zweiter ingetrierender Differenzverstärker (38) im zweiten Zweig, dem ein negierendes Schaltelement (37) vorgeschaltet ist, und der damit mit dem negativen Abtastsignal $-U_R$ am ersten, invertierenden Eingang beaufschalgt ist, und dessen zweiter Eingang mit einer zweiten Schwelleneingangsspannung $U_{S2}$ beaufschlagt ist, wobei der Verstärker (38) eine Grenzspannung von $-U_{L2}$ besitzt.

Fig. 1

Fig. 2

0052812

2/2